# EUROPÄISCHE PATENTSCHRIFT

(11) **EP 2 285 453 B1**
(45) Veröffentlichungstag und Bekanntmachung des Hinweises auf die Patenterteilung: **24.01.2018**
(21) Anmeldenummer: 09754307.8
(22) Anmeldetag: 29.05.2009
(51) Int. Cl.: F16L 17/04, A62C 2/06, F16L 59/14, A62C 3/16, F16L 21/00, F16L 21/08, F16L 57/04, F16L 59/20

(54) **HITZESCHUTZ FÜR TEMPERATUREMPFINDLICHE BAUTEILE**
HEAT PROTECTION FOR TEMPERATURE SENSITIVE PARTS
PROTECTION CONTRE LA CHALEUR POUR DES PARTS SENSIBLE À LA TEMPÉRATURE

(30) Priorität: 30.05.2008 CH 8292008
(43) Veröffentlichungstag der Anmeldung: 23.02.2011
(73) Patentinhaber: Straub Werke AG, 7323 Wangs (CH)
(72) Erfinder: MANNHART, Hubert, CH-7320 Sargans (CH); DURISCH, Ruben, CH-7013 Domat- Ems (CH)
(74) Vertreter: Rosenich, Paul
(86) Internationale Anmeldenummer: PCT/IB2009/052275
(87) Internationale Veröffentlichungsnummer: WO 2009/144682

(56) Entgegenhaltungen:
- EP-A- 1 278 982
- EP-A- 1 760 007
- EP-A1- 0 486 299
- DE-A1- 19 647 242
- DE-U1- 20 317 181
- Anonymous: "3M Fire Barrier FS-195+ Wrap/Strip", , 31 December 1999 (1999-12-31), XP055356381, Retrieved from the Internet: URL:http://multimedia.3m.com/mws/media/201 515O/3m-fire-barrier-fs-195-wrap-strip.pdf [retrieved on 2017-03-20]

## Beschreibung

Die Erfindung betrifft eine Rohrkupplung nach dem Oberbegriff des Anspruchs 1.

Bauteile, welche unter anderem auch sicherheitstechnische Funktionen ausüben, müssen ihre Aufgaben auch dann voll erfüllen können, wenn beispielsweise im Brandfall, höhere Temperaturen auf sie einwirken. Zu diesem Zweck ist es bekannt, solche Bauteile aussen durch Isolationsmaterial abzudecken oder solches in den Bauteil selbst zu integrieren.

Beispielsweise aus der EP 0 900 346 B1 sind Rohrkupplungen bekannt, die ein zweiteiliges, ineinander geschachteltes Gehäuse aufweisen. Zwischen den beiden Gehäuseteilen ist eine wärmeisolierende Schutzeinlage, beispielsweise aus Glaswolle oder Asbest, angeordnet.

Aus der EP 1 278 982 B1 der Anmelderin sind ausserdem Rohrkupplungen bekannt, welche dadurch verstärkt flammgeschützt werden, dass sie an der Oberfläche mit intumeszierendem, d.h. unter Hitzeeinwirkung sehr stark aufquellendem, bzw. aufschäumendem Material beschichtet sind. Diese beispielsweise für Feuerlösch- oder Treibstoffleitungen eingesetzten Flammkupplungen haben sich im Prinzip bewährt. Das Intumeszieren ist jedoch nicht ideal. Wenn beispielsweise eine punktuelle Erhitzung auftritt (beispielsweise durch unabsichtliches in die Nähe Kommen mit einem Gasbrenner, einer Lötpistole oder dergleichen), kann an dieser punktförmigen Berührungsstelle der Wärmequelle und der Kupplung das Aufschäumen der Beschichtung partiell erfolgen. Dies wäre aus gesamtenergetischer Betrachtung jedoch noch nicht notwendig und führt daher nicht zu einer Verbesserung der Wärme bzw. Feuerschutzeigenschaften dieser Kupplung.

Es gibt auch noch andere Arten von Flammschutz, wie beispielsweise der Flammschutz "Flamstop-FS" der Anmelderin, bei der eine Kupplung mit einer wärmeisolierenden Matte umschlossen wird und die wärmeisolierende Matte durch ein geschlossenes Abdeckblech in Position gehalten wird.

Eine andere Form von intumeszierender Beschichtung ist im US-Patent 4,879,320 beschrieben, in dem die intumeszierende Schicht zusätzlich mit Aluminiumoxyd-Silikondioxyd oder anderen Metalloxyden oder anderen faserförmigen Metalloxyden versetzt ist. Durch dieses Beimischen von Oxydfasern verbessert sich der thermische Schutz durch die intumeszierende Beschichtung. Ausserdem wirken sie reflektierend.

Aus der DE 203 17 181 U1 ist eine Dichtung für Brandschutzzwecke mit einem intumeszenten Material und einem auf der Aussenfläche des intumeszenten Materials angeordneten elektrischen Hitzeerzeuger bekannt.

Aus der DE 196 47 242 A1 ist eine Rohrabschottung durch ein Bauteil bekannt, die einen um das Rohr gewickelten Streifen aus Intumeszenzmaterial umfasst, welche von einer Hülle in Form einer geschlungenen Metalfolie umgeben wird.

Die EP 0 486 299 A1 offenbart eine Brandschutzvorrichtung für Rohrdurchführungen in Wänden oder Decken. Um einen Brandschutz zu schaffen, umfasst diese Vorrichtung ein intumeszierendes Material, welches von Wärmeleitungslaschen in einem Band getragen wird.

Das Dokument "3M Fire Barrier FS-195+ Wrap/Strip" zeigt feuerfeste Montagestreifen, welche aus einer Aluminiumfolie mit intumeszierenden Material bestehen (Quelle: www.multimedia.3m.com/mws/media/201515O/30-fire-barrier-fs-195-wrap-strip.pdf).

Der Erfindung liegt somit die Aufgabe zugrunde, eine Rohrkupplung zu schaffen, bei der unbeabsichtigte, kleinere, lokal einwirkende Wärmeangriffe nicht bereits zu einem partiellen Aufschäumen der intumeszierenden Schicht führen. Gleichzeitig soll bei einem stärkeren bedrohlichen Hitzeangriff auf die Rohrkupplung ein kontrolliertes grossflächiges Aufschäumen und dadurch Ausbildung eines zusätzlichen thermischen Schutzes erfolgt.

Gemäss der Erfindung wird dies dadurch erreicht, dass der Überzug von einem Schutzmantel gegen kleinere, lokal einwirkende Wärmeangriffe abgedeckt ist, wobei der Schutzmantel von einer Hülle aus Blech gebildet ist, die an Ihrem Umfang mehrere Durchtrittsöffnungen für den Austritt des unter Hitzeeinwirkung aufquellenden intumeszierenden Materials aufweist. Ein wesentlicher Bestandteil der erfindungsgemässen Überlegungen ist, dass die intumeszierende Schicht an der Oberfläche des Bauteils mit einem Schutzmantel abgedeckt wird, der Durchbrüche, die über seine Oberfläche verteilt sind, aufweist.

Diese Abdeckung wird im Folgenden auch als "Lochblech" bezeichnet. Die Durchbrüche können dabei beliebige Formen aufweisen. Entscheidend ist das Verhältnis des Querschnitts der Durchbrüche zum nicht durchgebrochenen Material, das je nach Bedarf und verwendeter intumeszierender Schicht von Fall zu Fall unterschiedlich sein kann. Die erfindungsgemässe Kombination von intumeszierender Schicht mit Lochblechabdeckung führt zu überraschend verbesserten Ergebnissen bei der Flammschutzwirkung, wobei diese Ergebnisse offensichtlich durch die nachstehenden Phänomene erzielt werden:
a. Bietet das Lochblech einen gewissen zusätzlichen mechanischen Schutz, der verhindert, dass intumeszierende Beschichtungen bei der Montage der zu schützenden Bauteile oder dergleichen beschädigt werden können.
b. Wirkt das Lochblech als zusätzlicher Wärmeschutz. Für diese Aufgabe könnte es beispielsweise aus einem gut leitenden Werkstoff wie beispielsweise Kupfer oder Kupferlegierung hergestellt werden.
c. Durch die verbleibenden Stege des Lochblechs wird die Wärme von einem partiellen Bereich auf einen grösseren ausgebreiteten Bereich verteilt, so dass bei einem partiellen Angriff mit insgesamt geringer Energie das Aufschäumen der intumeszierenden Schicht in diesem partiellen Bereich vermieden wird. Die Wärmeverteilung im Lochblech reduziert die partielle Wärmeeinwirkung auf die intumeszierende Schicht und vermeidet dadurch ein partielles Aufschäumen.
d. Durch die Wärmeverteilung über die Stege des Lochblechs kommt es bei einem massiven Wärmeangriff zu einem kontrollierten Intumeszieren (Aufschäumen) über einen wesentlich grösseren Bereich der Kupplung als ohne das erfindungsgemässe Lochblech. Dadurch werden ein grossflächiges kontrolliertes Intumeszieren und ein vollständiger Wärmeschutz optimiert.

Ein weiteres, bisher ungelöstes Problem ist die Wasserlöslichkeit der bis heute für Rohrkupplungen eingesetzten bekannten intumeszierenden Materialien. So kann durch Spritzwasser die Beschichtung ganz oder teilweise beschädigt und somit unbrauchbar werden. Dagegen hilft eine besondere Ausgestaltung der Erfindung, bei der der Hauptbestandteil der Intumeszierenden Masse, z. B. Blähgraphit, in eine Polymermatrix eingebunden ist. Die Kombination eines Lochblechs mit einer solchen intumeszierenden Masse ist somit optimal, da sie alle denkbaren Probleme im Zusammenhang mit gutem Brandschutz löst. Ein Beispiel für dieses spezielle intumeszierende Material heisst Fireblock™ und wird von der Mobil Werke AG hergestellt. Ausser den idealen hydrophoben und treibstoffbeständigen Eigenschaften dieses Materials, lässt es sich auch gut z. B. durch Spritzgiessen verarbeiten und so in besonders gut geeignete Formen pressen, die für den jeweiligen Anwendungsfall optimiert werden können.

Die Durchtrittsöffnungen sind vorzugsweise nach einem geometrischen Muster angeordnet. Das Muster kann über den Umfang sich regelmässig wiederholend konstant bleiben oder variieren.

Die Form der Durchtrittsöffnungen hat ebenfalls einen gewissen Einfluss auf das Quellverhalten des intumeszierenden Materials. Als besonders vorteilhaft hat es sich erwiesen, dass die Durchtrittsöffnungen als im Wesentlichen kreisförmige Löcher ausgebildet sind. Kreisförmige Löcher ermöglichen einen guten - anfänglich pilzförmigen - Durchtritt des intumeszierenden Materials, das sich somit gut und nach radial ausbreitend als zusätzlicher Schutz aufbaut.

Eine weitere zweckmässige Ausführung besteht darin, dass die Durchtrittsöffnungen als Langlöcher ausgebildet sind. Die Länge und Breite der Langlöcher kann so optimiert werden, dass die mechanische Festigkeit der Hülle nicht zu stark reduziert wird.

Die Durchtrittsöffnungen können vorteilhaft im Wesentlichen auch quadratisch ausgebildet werden. Diese quadratische Form ergibt auch günstige Stanzwerkzeuge und hohe Standzeiten der Werkzeuge.

Da die Hülle den zu schützenden Bauteil der Rohrkupplung nicht in jedem Fall vollständig umgeben kann, ist es zweckmässig, dass die Hülle mit dem zu schützenden Bauteil der Rohrkupplung mechanisch, jedoch mit reduzierter Wärmeübertragung, verbunden ist. Dies kann beispielsweise durch Schraubelemente oder sog. "Pop-Nieten" erfolgen.

Besonders vorteilhaft ist das Anwendungsgebiet der Erfindung, wenn der Bauteil als Rohrkupplung mit einem oder mehreren gummielastischen Dichtelementen ausgebildet ist. Solche Rohrkupplungen werden beispielsweise in grosser Zahl auch in Schiffen eingebaut, wo sie für die Sicherheit des Schiffes von grosser Bedeutung sind.

Diese bekannten Rohrkupplungen weisen vorteilhaft einen Verschluss zum Verspannen der Rohrkupplung auf, wobei der Verschluss vorzugsweise Bolzen und diese querdurchsetzte Spannschrauben aufweist.

Die Hitzeeinwirkung erfolgt sehr oft nicht nur am Umfang des Bauelementes, sondern auch von dessen Seiten her. Aus diesem Grund ist es vorteilhaft, dass der Überzug den zu schützenden Bauteil axial überragt und die seitlichen Flanken des Bauteils abdeckt. Durch verstärkten Materialeinsatz, z.B. durch wulstförmige Ausbildung des Randbereichs, kann auch dieser Bereich gut im Intumeszierfall geschützt werden, da das aufschäumende Material dann die axialen Stirnseiten der Kupplung bis hin zum Rohr umschliesst.

Wie oben erwähnt, kann die Hülle beispielsweise aus Kupfer oder Kupferlegierungen hergestellt werden. Die mechanische Festigkeit dieser Werkstoffe ist allerdings begrenzt. Es ist daher zweckmässig, den Überzug aus rostfreiem Stahl herzustellen. Vorzugsweise wird ein rostfreier Federbandstahl (insbesondere gemäss DIN 1.4310. oder 1.4401) verwendet. Durch die Verwendung des rostfreien Federbandstahles wird einerseits die mechanische Festigkeit und der mechanische Schutz erhöht, anderseits, aufgrund der geringeren Wärmeleiteigenschaften von rostfreiem Stahl, jedoch auch ein gewisser Wärmeschutz erzeugt.

Der Überzug aus intumeszierendem Material kann beispielweise aufgespritzt oder als Matte auf die Oberfläche des zu schützenden Bauteils aufgetragen werden. Besonders vorteilhaft wird die intumeszierende Masse jedoch als vorgefertigter, schlauchförmiger Überzug aus vernetztem, wasser- und treibstoffunempfindlichem Material auf den Bauteil aufgebracht.

Die Erfindung soll nachstehend anhand der sie beispielhaft wiedergebenden Zeichnungen näher erläutert werden.

Die Bezugszeichenliste ist Bestandteil der Offenbarung.

Die Figuren werden zusammenhängend und übergreifend beschrieben. Gleiche Bezugszeichen bedeuten gleiche Bauteile, Bezugszeichen mit unterschiedlichen Indizes geben funktionsgleiche oder ähnliche Bauteile an.

Es zeigen dabei
- Fig. 1: eine Stirnseitenansicht einer erfindungsgemäss geschützten Rohrkupplung,
- Fig. 2: eine Draufsicht auf die Rohrkupplung gemäss Fig. 1,
- Fig. 3: eine Seitenansicht der Rohrkupplung gemäss Fig. 1, von rechts her, teilweise im Schnitt dargestellt,
- Fig. 4: eine Seitenansicht der Rohrkupplung gemäss Fig. 1, von links her,
- Fig. 5: einen Querschnitt durch die Rohrkupplung gemäss Fig.4, entlang der Linie V - V,
- Fig. 6: eine perspektivische Darstellung der in den Fig. 1 bis 5 dargestellten Rohrkupplung,
- Fig. 7: eine Abwicklung der in den Fig. 1 bis 6 dargestellten Hülle der Rohrkupplung,
- Fig. 8: eine Variante der Abwicklung gemäss Fig. 7,
- Fig. 9: eine Variante der Abwicklung gemäss Fig. 7 oder 8,
- Fig.10: eine Variante der Abwicklung gemäss den Fig. 7 bis 9,
- Fig.11 bis 14: verschiedene geometrische Muster der Anordnung und Formen von Durchtrittsöffnungen, und
- Fig.15: die Abwicklung einer Hülle mit als Buchstaben ausgebildeten Durchtrittsöffnungen.

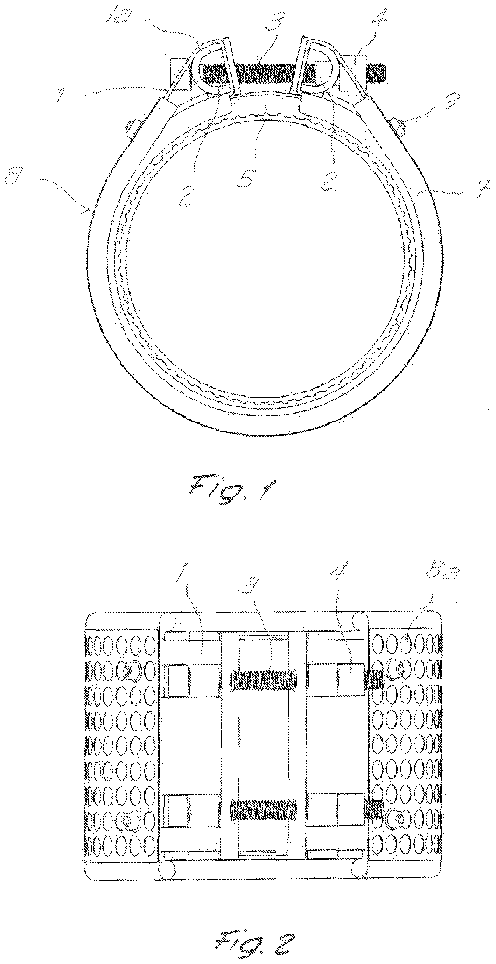

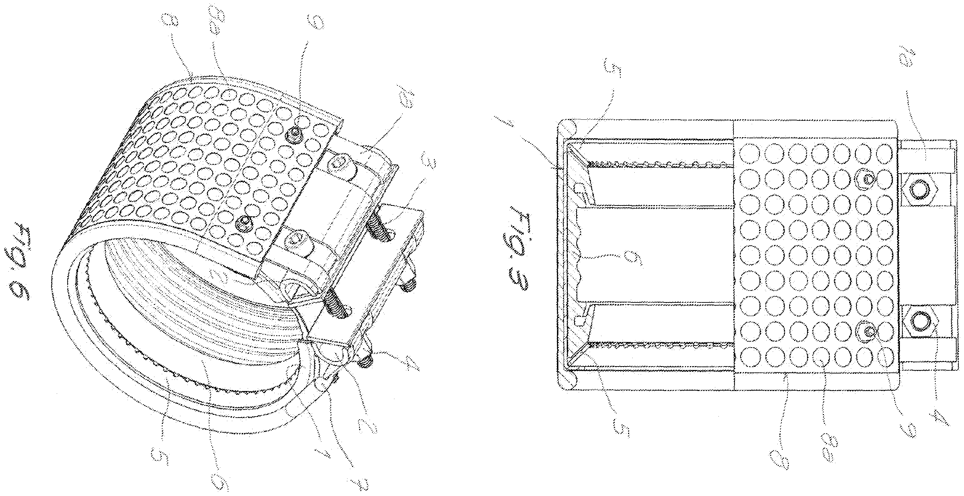

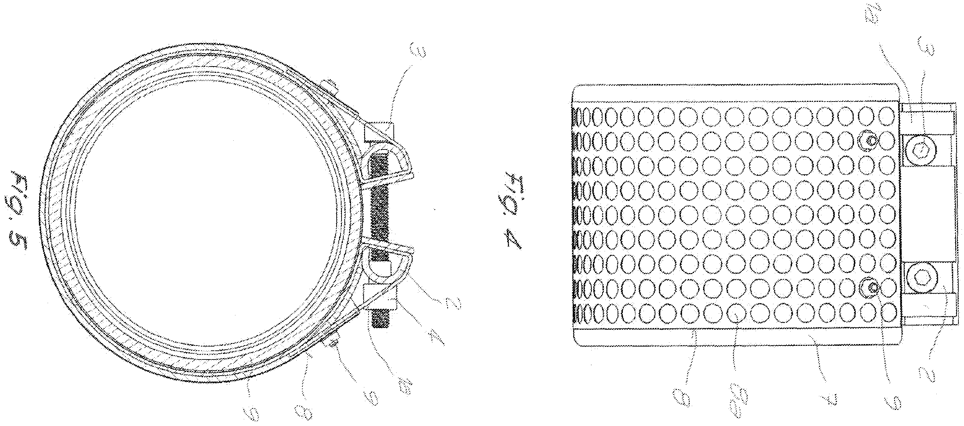

Die aus den Fig. 1 bis 6 ersichtliche, gegen Hitzeeinwirkung zu schützende Rohrkupplung weist ein Gehäuse 1 mit den Enden eines Längsschlitzes umgebogenen Laschen 1a auf. In die Laschen sind Bolzen 2 eingesetzt, welche von Spannschrauben 3 quer durchsetzt werden. Muttern 4 dienen zum verspannen des Gehäuses 1. Verankerungsringe 5, welche zum axial zugfesten Verbinden glattendiger Rohre dienen, stützen sich in den Ecken des Gehäuses 1 ab. Eine im Querschnitt etwa C-förmige Dichtmanschette 6 dient der Abdichtung der Verbindungsstelle.

Auf die Mantelfläche des Gehäuses ist ein Überzug 7 aus intumeszierendem, d.h. unter Hitzeeinwirkung stark aufquellendem Material aufgebracht. Der Überzug wird aussen von einer metallischen Hülle 8 umgeben. Die Hülle 8 ist mit Durchtrittsöffnungen 8a für das intumeszierende Material des Überzugs 7 versehen. Die Hülle 8 ist mittels beispielsweise als sog. "Pop-Nieten" ausgebildeten Befestigungselementen 9 durch den Überzug hindurch mit dem Gehäuse 1 verbunden.

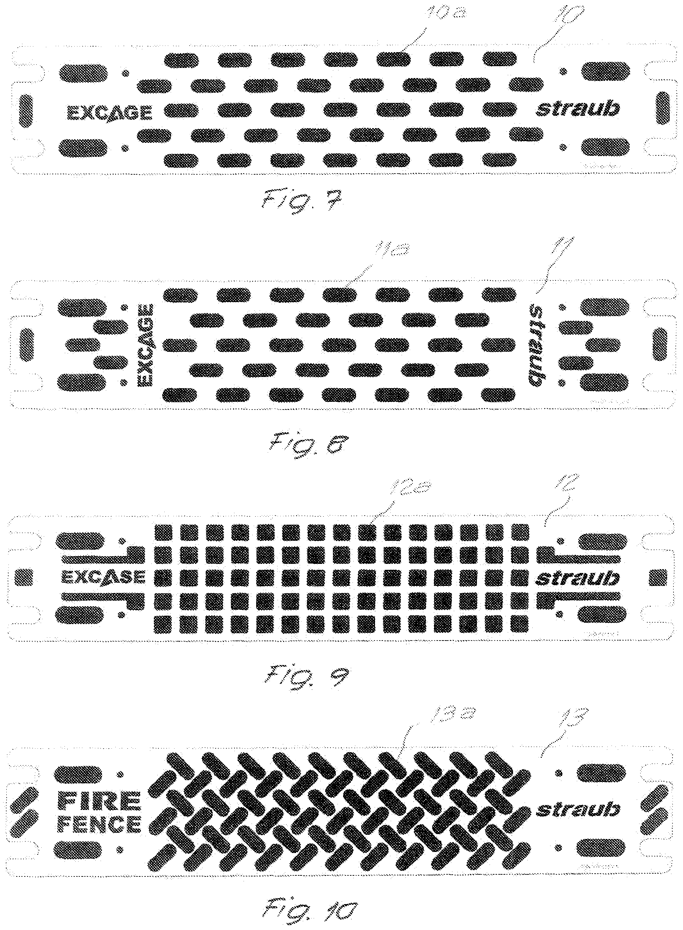

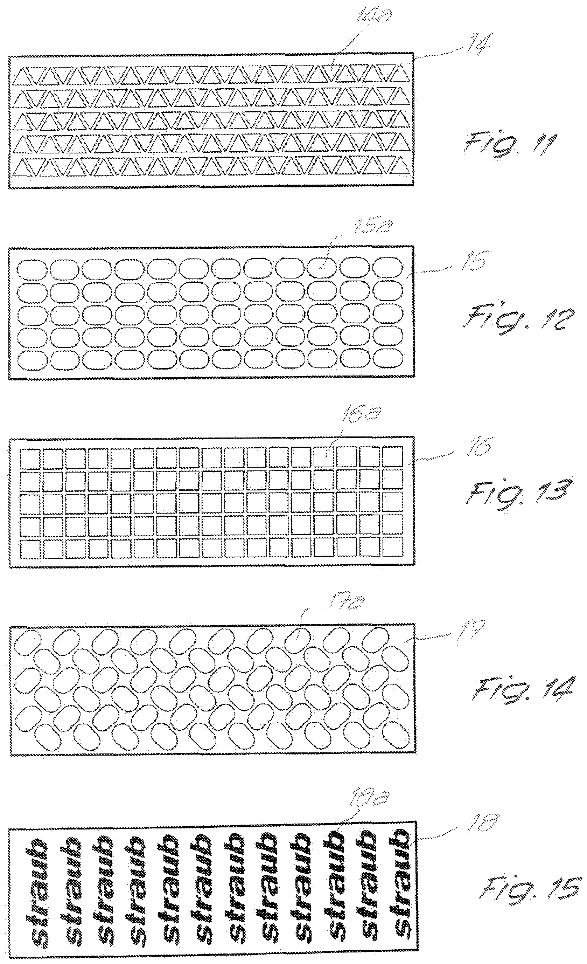

In den Fig. 10 bis 18 sind Abwicklungen der Hülle mit unterschiedlichen Lochbildern dargestellt. Die Form und Anordnung der Durchtrittsöffnungen können innerhalb bestimmter Grenzen gewählt werden.

Wie aus Fig. 18 ersichtlich können die Durchtrittsöffnungen beispielsweise auch in der Form von Buchstaben oder anderen Schriftzeichen ausgebildet werden.

### Bezugszeichenliste

- 1: Gehäuse
- 1a: Lasche
- 2: Bolzen
- 3: Spannschraube
- 4: Mutter
- 5: Verankerungsring
- 6: Dichtmanschette
- 7: Überzug
- 8: Hülle
- 8a: Durchtrittsöffnung
- 9: Befestigungselement
- 10: Hülle
- 10a: Durchtrittsöffnung
- 11: Hülle
- 11a: Durchtrittsöffnung
- 12: Hülle
- 12a: Durchtrittsöffnung
- 13: Hülle
- 13a: Durchtrittsöffnung
- 14: Hülle
- 14a: Durchtrittsöffnung
- 15: Hülle
- 15a: Durchtrittsöffnung
- 16: Hülle
- 16a: Durchtrittsöffnung
- 17: Hülle
- 17a: Durchtrittsöffnung
- 18: Hülle
- 18a: Durchtrittsöffnung

## Patentansprüche

1. Rohrkupplung mit einem oder mehreren gummielastischen Dichtelementen (6) und mit einem Hitzeschutz, welcher aus einem die Bauteile der Rohrkupplung umgebenden Überzug (7) aus intumeszierendem Material gebildet ist, **dadurch gekennzeichnet, dass** der Überzug (7) von einem Schutzmantel gegen kleinere, lokal einwirkende Wärmeangriffe abgedeckt ist, wobei der Schutzmantel von einer Hülle (8, 10-18) aus Blech gebildet ist, die an Ihrem Umfang mehrere Durchtrittsöffnungen (8a) für den Austritt des unter Hitzeeinwirkung aufquellenden intumeszierenden Materials aufweist.

2. Rohrkupplung nach Anspruch 1, **dadurch gekennzeichnet, dass** die Durchtrittsöffnungen (8a) nach einem geometrischen Muster angeordnet sind.

3. Rohrkupplung nach Anspruch 1 oder 2, **dadurch gekennzeichnet, dass** die Durchtrittsöffnungen (8a) als im wesentlichen kreisförmige Löcher ausgebildet sind.

4. Rohrkupplung nach einem der vorhergehenden Ansprüche, **dadurch gekennzeichnet, dass** die Durchtrittsöffnungen (10a, 11a, 13a) als Langlöcher ausgebildet sind.

5. Rohrkupplung nach einem der vorhergehenden Ansprüche, **dadurch gekennzeichnet, dass** die Durchtrittsöffnungen (12a) im wesentlichen quadratisch ausgebildet sind.

6. Rohrkupplung nach einem der vorhergehenden Ansprüche, **dadurch gekennzeichnet, dass** die Hülle (8, 10-18) mit dem zu schützenden Bauteil der Rohrkupplung mechanisch, jedoch mit reduzierter Wärmeübertragung, verbunden ist.

7. Rohrkupplung nach einem der vorhergehenden Ansprüche, **dadurch gekennzeichnet, das**s die Rohrkupplung einen Verschluss zum Verspannen der Rohrkupplung aufweist, wobei der Verschluss vorzugsweise Bolzen (2) und diese quer durchsetzten Spannschrauben (3) aufweist.

8. Rohrkupplung nach einem der vorhergehenden Ansprüche, **dadurch gekennzeichnet, dass** der Überzug (7) den zu schützenden Bauteil - insbesondere die Rohrkupplung - axial überragt und die seitlichen Flanken des Bauteils wenigstens teilweise und vorzugsweise wulstförmig abdeckt.

9. Rohrkupplung nach einem vorhergehenden Ansprüche, **dadurch gekennzeichnet, dass** die Hülle (8, 10-18) aus rostfreiem Stahl hergestellt ist.

10. Rohrkupplung nach einem vorangehenden Ansprüche, **dadurch gekennzeichnet, dass** der Überzug oder mindestens jedoch die Hülle auch den Verschluss der Rohrkupplung abdeckt.

## Claims

1. A pipe coupling with one or several rubber-elastic sealing elements (6) and with a heat shield, which consists of a coating (7) of intumescent material that envelops the components of the pipe coupling, **characterized in that** the coating (7) is shielded by a protective jacket against smaller, locally acting thermal exposures, wherein the protective jacket is comprised of a sheath (8, 10-18) of sheet metal, the circumference of which has several openings (8a) through which the intumescent material that swells while being exposed to heat can exit.

2. The pipe coupling according to claim 1, **characterized in that** the openings (8a) are arranged according to a geometric pattern.

3. The pipe coupling according to claim 1 or 2, **characterized in that** the openings (8a) are designed as essentially circular holes.

4. The pipe coupling according to one of the preceding claims, **characterized in that** the openings (10a, 11a, 13a) are designed as oblong holes.

5. The pipe coupling according to one of the preceding claims, **characterized in that** the openings (12a) are essentially square in design.

6. The pipe coupling according to one of the preceding claims, **characterized in that** the sheath (8, 10-18) is mechanically connected with the component of the pipe coupling to be protected, but with a reduced heat transfer.

7. The pipe coupling according to one of the preceding claims, **characterized in that** the pipe coupling has a fastener for bracing the pipe coupling, wherein the fastener preferably has bolts (2) and clamp screws (3) that transversely intersect them.

8. The pipe coupling according to one of the preceding claims, **characterized in that** the coating (7) protrudes axially over the component to be protected-in particular the pipe coupling-and covers the lateral flanks of the component at least partially, preferably like a bead.

9. The pipe coupling according to one of the preceding claims, **characterized in that** the sheath (8, 10-18) is made out of stainless steel.

10. The pipe coupling according to one of the preceding claims, **characterized in that** the coating or at the very least the sheath also covers the fastener of the pipe coupling.

## Revendications

1. Raccord de tube avec un ou plusieurs éléments d'étanchéité (6) élastiques caoutchouteux et avec une protection thermique qui est formée d'un revêtement (7) en matière intumescente, entourant les composants du raccord de tube, **caractérisé en ce que** le revêtement (7) est recouvert d'une enveloppe protectrice contre les attaques thermiques plus légères, agissant localement, l'enveloppe protectrice étant formée d'une gaine (8, 10 à 18) en tôle, qui sur son pourtour comporte plusieurs orifices de passage (8a) pour la sortie de la matière intumescente qui gonfle sous l'effet de la chaleur.

2. Raccord de tube selon la revendication 1, **caractérisé en ce que** les orifices de passage (8a) sont placés selon un motif géométrique.

3. Raccord de tube selon la revendication 1 ou 2, **caractérisé en ce que** les orifices de passage (8a) sont conçus sous la forme de trous sensiblement circulaires.

4. Raccord de tube selon l'une quelconque des revendications précédentes, **caractérisé en ce que** les orifices de passage (10a, 11a, 13a) sont conçus sous la forme de trous oblongs.

5. Raccord de tube selon l'une quelconque des revendications précédentes, **caractérisé en ce que** les orifices de passage (12a) sont conçus sous une forme sensiblement quadratique.

6. Raccord de tube selon l'une quelconque des revendications précédentes, **caractérisé en ce que** la gaine (8, 10 à 18) est assemblée mécaniquement, toutefois avec un transfert thermique réduit avec le composant à protéger du raccord de tube.

7. Raccord de tube selon l'une quelconque des revendications précédentes, **caractérisé en ce que** le raccord de tube comporte une fermeture, destinée à contraindre le raccord de tube, la fermeture comportant de préférence des boulons (2) et des vis de serrage (3) traversant ces derniers à la transversale.

8. Raccord de tube selon l'une quelconque des revendications précédentes, **caractérisé en ce que** le revêtement (7) saillit en direction axiale par-dessus le composant à protéger (notamment le raccord de tube) et recouvre au moins en partie et de préférence en forme de bourrelet les flancs latéraux du composant.

9. Raccord de tube selon l'une quelconque des revendications précédentes, **caractérisé en ce que** la gaine (8, 10 à 18) est fabriquée en acier inoxydable.

10. Raccord de tube selon l'une quelconque des revendications précédentes, **caractérisé en ce que** le revêtement ou au moins toutefois la gaine recouvre également la fermeture du raccord de tube.
